# EUROPÄISCHE PATENTSCHRIFT

(11) **EP 1 247 855 B1**
(45) Veröffentlichungstag und Bekanntmachung des Hinweises auf die Patenterteilung: **09.05.2012**
(21) Anmeldenummer: 02005687.5
(22) Anmeldetag: 13.03.2002
(51) Int. Cl.: C09J 7/02

(54) **Selbstklebefolie zum Schutz von Fahrzeuglacken**
Self-adhesive foil for protecting vehicle paints
Feuille auto adhésive pour la protection de peintures de véhicule

(30) Priorität: 02.04.2001 DE 10116438
(43) Veröffentlichungstag der Anmeldung: 09.10.2002
(73) Patentinhaber: TESA SE, 20253 Hamburg (DE)
(72) Erfinder: Lühmann, Bernd, Dr., 22844 Norderstedt (DE); Böhm, Nicolai, Dr., 22559 Hamburg (DE); Schütz, Ingolf, 20535 Hamburg (DE); Sinnen, Herbert, 25421 Pinneberg (DE); Neubert, Ingo, Dr., 22850 Norderstedt (DE); Müssig, Bernhard, Dr., 21218 Seevetal (DE)

(56) Entgegenhaltungen:
- EP-A- 0 661 364
- WO-A-96/37568

## Beschreibung

Die Erfindung betrifft eine selbstklebende Folie zum temporären Schutz von frischen Lackoberflächen von Fahrzeugen wie Automobilen und frisch lackierten Fahrzeugteilen gegen Verschmutzungen und Beschädigungen während der Montage, des Transports und der Lagerung sowie ihre Verwendung an Fahrzeugen, im speziellen an Automobilen.

Die Konservierung und der Schutz von Kraftfahrzeugen während des Transports vom Hersteller zum Händler werden schon seit geraumer Zeit praktiziert. Bekannt ist, daß zum Konservieren von Automobilen Paraffinwachse in der Stärke von 5 bis 20 µm aufgetragen werden. Es hat sich aber gezeigt, daß insbesondere bei waagerecht liegenden Flächen der Fahrzeuge eine derart dünne und zumeist ungleichmäßige Schicht gegen äußere Einflüsse, wie beispielsweise die ätzende Wirkung von Vogelkot, nicht genügend Schutz bietet. Ein erheblicher Nachteil der Paraffinwachsversiegelung ist des weiteren die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung paßgenau aufgeschrumpft werden. Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlußöffnungen vorgesehen, die zeitraubend geöffnet und wieder verschlossen werden müssen. Die Sicht beim Rangieren ist zudem stark beeinträchtigt, und es kommt durch eingeschlossenen Schmutz und durch unvermeidbares Scheuern auf dem Lack stellenweise zu Mattierungen. Diese Lösung hat sich bislang nicht durchsetzen können.

Selbstklebende Oberflächenschutzfolien für Kraftfahrzeuge sind ebenfalls seit einiger Zeit bekannt. In den meisten Fällen handelt es sich dabei um permanent klebende Schutzund Dekorfolien, wie zum Beispiel eine Steinschlagschutzfolie. Diese Selbstklebefolien verbleiben nach ihrer Montage permanent am Fahrzeug.

In den letzten Jahren werden verstärkt temporäre selbstklebende Oberflächenschutzfolien angewendet. Diese reversibel klebenden Schutzfolien sind speziell für den mechanischen und chemischen Schutz während des Transports und der Lagerung von frisch lackierten Kraftfahrzeugen und Fahrzeugteilen vorgesehen und haben eine gegenüber den Wachsen deutlich verbesserte Schutzwirkung und gegenüber den Hauben den Vorteil, kostengünstiger und deutlich schneller applizierbar zu sein.
Eine wesentliche Anforderung an eine temporäre Oberflächenschutzfolie ist ihre Witterungs- und Lichtbeständigkeit über einen Zeitraum von mehreren Monaten. So muß eine solche Folie auch nach einem halben Jahr intensiver Sonnenlichtexposition und Wechselklima rückstandsfrei entfernbar sein.
Die Eigenschaft der Rückstandsfreiheit muß ebenfalls für das Entfernen der Schutzfolie bei erhöhten Temperaturen von mindestens 50 °C gewährleistet sein, da davon auszugehen ist, daß sich die Fahrzeugoberflächen insbesondere in den Sommermonaten und in südlichen Regionen erwärmen, und nicht davon ausgegangen werden darf, daß vor der Demaskierung der Oberflächenschutzfolien eine Abkühlung der Fahrzeuge abgewartet wird.
Die Endklebkraft darf auf dem Lack, vom Fachmann als Aufziehen bezeichnet, nicht zu hoch sein, da andernfalls das Demaskieren der Lackoberflächen mit einem großen Kraftaufwand oder gar Reißen der Folie verbunden ist. Die Oberflächenschutzfolie muß zudem eine ausreichend hohe Anfangsklebrigkeit besitzen, damit auch in schwierigen Oberflächengeometrien eine ausreichende Verklebungssicherheit gewährleistet werden kann.

Bisher verfügbare reversibel klebende Oberflächenschutzfolien weisen erhebliche Mängel in Bezug auf Verklebungssicherheit, Aufziehverhalten oder Alterungsstabilität auf.

Wesentliche Anforderungen an eine Oberflächenschutzfolie sind
- gute Schutzwirkung für den Lack gegen chemische und mechanische Einflüsse.
- Witterungsbeständigkeit über den gesamten Zeitraum der Transportkette vom Werk bis zum Händler, der je nach Entfernung etliche Monate betragen kann. So muß eine solche Folie auch nach langer intensiver Sonnenlichtexposition in einem Stück abziehbar sein und darf keine Klebmasserückstände auf dem Lack hinterlassen.
- ausreichende Anfangsklebrigkeit, um sich in schwierigen Verklebungsgeometrien nicht vorzeitig selbsttätig abzulösen.
- ausgewogene Endklebkraft, damit die Folie einerseits sicher haftet (auch bei starkem Fahrtwind oder Regen), andererseits ohne großen Kraftaufwand oder gar Reißen entfernbar ist. Ideal wäre die gewünschte Verklebungsfestigkeit von Anfang an. In der Praxis ist die Haftung jedoch zunächst schwächer und nimmt dann mit der Zeit und besonders unter Temperatureinfluß zu. Dieses wird in der Fachsprache "Aufziehen" genannt.
- Lackverträglichkeit, was bedeutet, daß die Lackoberfläche nach Entfernen des Klebebandes keinerlei Beeinträchtigungen in Form von Belägen oder Deformationen aufweisen soll. Deformationen sind Abdrücke im Lack, die sich einerseits als Konturen von Folienkante, eingeklebten Luftblasen und Falten, andererseits als Mattierungen unter der gesamten beklebten Fläche zeigen.

Gemäß dem Stand der Technik werden zum temporären Oberflächenschutz in der Regel als Folienmaterialien Polyolefine oder Mischungen aus solchen, die üblicherweise mit Lichtschutzmitteln und Titandioxid abgemischt sind, verwendet (DE 199 23 780 A1, DE 196 35 704 A1).

Als Selbstklebemassen finden polare und unpolare Polymere Verwendung. Prinzipiell zeigen alle bekannten polaren Selbstklebemassen wie zum Beispiel auf Basis von EVA und Polyacrylat im Test, d.h. nach Aufbringen auf lackierte Bleche und anschließender Wechselklimalagerung, eine erhebliche Lackunverträglichkeit. Die Lackunverträglichkeit bewirkt eine hohe Verklebungsfestigkeit, vom Fachmann Aufziehen genannt, sowie Lackdeformationen nach Klimalagerung.

Die in der DE 195 32 220 A1 dargelegte Klebefolie mit polaren Polyethylenvinylacetat-Klebmassen (EVAc) ist den oben beschriebenen Systemen in den Haftungseigenschaften überlegen.

Dieses System erreicht bereits nach kurzer Zeit gute Verklebungswerte und gewährleistet eine große Verklebungssicherheit gegen unerwünschtes selbsttätiges Ablösen während des Transportes. Andererseits wird nach der Anwendung bedingt durch die Verwendung der polaren Polyethylenvinylacetat-Klebmasse ein starkes Aufziehen der Oberflächenschutzfolie sowie erhebliche Deformationen der Lackoberfläche beobachtet.
Deformationen sind visuell erkennbare irreversible Veränderungen der Lackoberfläche, die entstehen, wenn der frische, nicht vollständig ausgehärtete Lack mit einer ungeeigneten Schutzfolie abgedeckt wird. Der Fachmann vermeidet daher polare Klebmassesysteme für den temporären Oberflächenschutz.

Die meisten bekannten unpolaren, unvernetzten Selbstklebemassen zeigen auf der anderen Seite eine geringe Kohäsion, was zu Masserückstände beim Abziehen der Schutzfolie nach der Anwendung führt.

Die WO 96/37568 A1 beschreibt die Verwendung von Polyhexen beziehungsweise Polyocten für einen unpolaren Haftkleber. Die in den Beispielen beschriebenen Polymere weisen zwar ein geringes Aufziehen auf Lackoberflächen auf, bedingt durch das niedrige Molekulargewicht derartiger handelsüblicher Polymere, führen aber zu erheblichen Rückständen auf der Lackoberfläche nach der Anwendung. Auch durch Zugabe sogenannter "cold flow restricting agent" können diese Rückstände nicht vermieden werden.
Werden jedoch diese Klebemassen vor der Verwendung chemisch oder strahlenvernetzt, um so die Kohäsion zu steigern, beobachtet man unerwünschte Deformation der Lackoberfläche.

Ein Ausnahmefall stellen nur Selbstklebemassen auf Naturkautschukbasis dar, sie lassen sich mit nur geringer Lackdeformation rückstandsfrei abziehen. Diese Massen sind allerdings unter Einwirkung von UV-Strahlung nicht alterungsstabil. Dies führt zu starken schmierigen oder lackartig verhärteten Rückständen auf dem lackierten Blech nach extremer klimatischer Beanspruchung über einen längeren Zeitraum (drei bis sechs Monate), wie sie beispielsweise in Florida auftreten.

Als unpolare Klebmassenbasis für den Oberflächenschutz mit einer ausreichend hohen Kohäsion eignen sich lediglich Polymere aus den Klassen der Polyisobutylene und Butylkautschuke, der hydrierten Styrol-Block-Copolymere sowie der Ethylen/Propylen-Co- und Terpolymere.

Die EP 0 519 278 A1 beschreibt eine Folie zum Schutz von Automobilen, die aus einem Träger besteht, der mit einem Haftklebstoff auf Kautschukbasis, insbesondere Polyisobutylen, der ein dynamisches Elastizitätsmodul von 2 x 10⁵ bis 7 x 10⁶ dyn/cm², dies entspricht in SI-Einheiten einem Wert von 2 x 10⁴ bis 70 x 10⁴ Pa, bei 60 °C aufweist, beschichtet ist.
Anwendungstechnische Versuche mit einer derartigen Selbstklebefolie zeigen eine gute Verträglichkeit mit Lackoberflächen. Die Haftfestigkeit nach Wechselklimalagerung auf in der Automobilindustrie gebräuchlichen Lacken ist jedoch so gering, daß die in der Praxis geforderte Verklebungsfestigkeit nicht immer ausreichend gegeben ist. Insbesondere bei Feuchteeinfluß auf die Folie ist die Haftfestigkeit häufig derart reduziert, daß sich die Folie während des Transports von den mit ihr geschützten Fahrzeugen ablöst, so daß zum einen keine Schutzwirkung mehr besteht und zum anderen von der sich ablösenden Folie ein erhebliches Sicherheitsrisiko für zum Beispiel nachfolgende Fahrzeuge besteht.
Darüber hinaus weist die Selbstklebemasse keine Verträglichkeit mit den im Automobilbau üblichen Dichtungsgummis (Dichtungsprofilen) auf; beim Abziehen der Schutzfolie von Fensterprofilen verbleiben auf dem Gummi Masserückstände der Klebebeschichtung. Nach dem Abziehen der Schutzfolie bleiben Ränder mit Klebmasseresten zurück, die auf einen Abbau des Polymers durch UV-Bewitterung zurückzuführen sind.
Nachteilig ist ebenfalls das Alterungsverhalten der Polyisobutylene. Polyisobutylene sind bekanntermaßen weich (wenig kohäsiv), insbesondere nach Alterung durch Wärme oder UV-Strahlung. Dies führt zu Rückständen auf dem Lack nach dem Demaskieren. Aus diesem Grund ist die im Markt befindliche Klebefolie auf Basis Polyisobutylen stark pigmentiert, der zersetzende Einfluß von Licht soll von der Klebmasse möglichst ferngehalten werden. Im Kantenbereich wird die Klebmasse jedoch direkt dem UV-Licht ausgesetzt, was dort zu starken Rückständen führt. Dies versucht man durch den Zusatz von Antioxidantien und HALS-Lichtschutzmitteln im Polyisobutylen zu vermeiden, diese Additive sind in der US 5,601,917 A1 beschrieben.

Klebmassen auf Basis von hydrierten Styrol-Dien-Blockcopolymeren, deren Anwendung im Oberflächenschutz in JP 08 027 444 A1, EP 0 888 882 A1, US 4,379,806 A1 beschrieben ist, sind etwas UV-stabiler als die auf Polyisobutylen-Basis. Ein wesentlicher Nachteil solcher Blockcopolymere ist aber ihre reversible thermische Vernetzung über die Styroldomänen. Zieht man eine daraus hergestellte Klebefolie im Sommer von einem in der Sonne erwärmten Fahrzeug ab, besteht die Gefahr, daß die Klebmasse auf dem Lack haften bleibt, weil die Kohäsion der Klebemassen im warmen Zustand auf Grund des Aufschmelzens der Styroldomänen geringer als die Haftung auf dem Lack ist.
Des weiteren führt eine Erwärmung stets zum Schrumpf der Schutzfolie, die in der Wärme weiche Klebmasse schmiert daher an den sich zurückziehenden Kanten der Klebefolie auf das Blech ab. Anwendungstechnische Prüfungen haben ebenfalls gezeigt, daß Abdeckfolienfolien mit Styrol-Blockcopolymer-Klebemassen erhebliche Deformationen des Fahrzeuglackes verursacht.

Die in DE 197 42 805 A1 beschriebene Klebmasse basiert auf einem Copolymer, daß aus mindestens zwei verschiedenen Olefinen mit 2 bis 12 Kohlenstoffatomen sowie einem Dien besteht. Bevorzugt werden Ethylen-Propylen-Dien-Terpolymeren (EPDM) verwendet. Unpolare Ethylen-Propylen-Dien-Polymere zeichnen sich durch gute Witterungs- und UV-Stabilität aus, so daß sie hervorragend als Klebmasse für Oberflächenschutzfolien geeignet sind. Die in dem Patent beschriebenen Terpolymere besitzen eine Mooney-Viskosität ML (1+4) 125 °C kleiner 50.
Untersuchungen verschiedener EPDM-Muster haben gezeigt, daß die Adhäsionsfähigkeit von EPDM-Polymeren mit steigender Mooney-Viskosität abnimmt, so haben nur Typen mit einer Mooney-Viskosität ML (1+4) 125 °C unterhalb von 30 eine ausreichende inhärente Klebrigkeit. Die Kohäsion dieser EPDM-Typen ist aber für eine Anwendung als temporäre Selbstklebmasse zu gering (analog WO 96/37568 A1), Klebmasserückstände auf der Lackoberfläche nach Bewitterung sind die Folge.
Das Beispiel 1 in DE 197 42 805 A1 beschreibt eine selbstklebende Schutzfolie mit einer Klebmasse bestehend aus einem EPDM mit einer Mooney-Viskosität ML (1+4) 125 °C von 28 sowie einem Lichtschutzmittel. Bei dieser Schutzfolie wird eine ausreichende hohe Klebkraft auf einer PU-Lackoberfläche von 0,4 N/cm erhalten.
Ein erheblicher Nachteil ist jedoch, bedingt durch das niedrige Molgewicht des Polymers, daß es nach Lagerung bei erhöhter Temperatur (90 °C) nicht möglich ist, diese Schutzfolie rückstandsfrei von der Lackoberfläche abzuziehen. Bereits bei leicht erhöhten Abzugstemperaturen von 40 °C versagt diese Klebmasse vollständig und spult vollflächig auf die Lackoberfläche um. Beim Abziehen mit praxisnaher Abzugsgeschwindigkeit von 20 m/min werden ein starker Anstieg der Abzugskräfte (4,3 N/cm) sowie vollflächige Masserückstände auf der Lackoberfläche beobachtet. Beim Abziehen der Schutzfolie von Prüflackoberflächen mit geringeren Abzugsgeschwindigkeit von 0,3 m/min (entsprechend AFERA 4001 beziehungsweise DIN EN 1939) werden nach Wechselklimalagerung dagegen lediglich punktuelle Masserückstände beobachtet und Klebkräfte von 2,3 N/cm gemessen.
In der Praxis werden die Fahrzeuge jedoch mit höheren Abzugsgeschwindigkeiten von mindestens 15 bis 30 m/min demaskiert, so daß die Messung der Klebkräfte nach AFERA 4001 beziehungsweise DIN EN 1939 nicht praxisrelevant ist. Eine Beurteilung der Eignung einer selbstklebenden Schutzfolie anhand dieser Meßmethoden ist nicht möglich.
Dem starken Aufziehen versucht man in den Beispielen 2 und 4 der Beschreibung durch eine Vernetzung der Klebmasse mittels Elektronen- beziehungsweise UV-Strahlung zu begegnen. Hier wird eine Klebkraft auf Lack (Abzugsgeschwindigkeit 0,3 m/min) nach Wechselklimalagerung von 2,2 N/cm erhalten. Der entsprechende Wert nach Wechselklimalagerung und einer Abzugsgeschwindigkeit von 20 m/min liegt bei 3,4 N/cm. Durch die Vernetzung wird eine Erhöhung der Kohäsion der Klebmasse erreicht, dadurch können Massereste auf der Lackoberfläche nach dem Abziehen von der Lackoberfläche vermieden werden. Die höhere Kohäsion der Klebmasse spiegelt sich ebenfalls in der Rückstandsfreiheit beim Abziehen der Schutzfolie von lackierten Prüfblechen bei Temperaturen bis zu 60 °C wieder. Andererseits ist die Klebmasse durch die Vernetzung nun jedoch relativ hart, was zu erheblichen Deformationen der Lackoberfläche sowie zu einer unzureichenden Anfangsklebkraft von 0,2 N/cm führt.

Ein weiteres Beispiel ist eine auf Poly-α-Olefinen basierende Klebmasse (DE 197 30 193 A1). Bei dieser Oberflächenschutzfolie wird ebenfalls eine erhebliche Diskrepanz zwischen den Klebkräften bei geringer und höherer Abzugsgeschwindigkeit beobachtet. Analog DE 197 42 805 A1 werden auch hier in den Beispielen nur Polymere mit einer Mooney-Viskosität ML (1+4) 125 °C unter 50 verwendet. Dadurch werden ebenfalls als Folge der geringen Kohäsion starkes Aufziehen und Masserückstände auf der Lackoberfläche beobachtet. Die Abzugskräfte liegen oberhalb von 3,2 N/cm.

Aufgabe der vorliegenden Erfindung ist es, hier Abhilfe zu schaffen, insbesondere eine selbstklebende Schutzfolie zu schaffen, die die Nachteile des Stands der Technik nicht oder zumindest nicht in dem Umfang aufweist. Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der selbstklebenden Schutzfolie sowie besondere Anwendungsmöglichkeiten.

Überraschend und selbst für den Fachmann unerwartet zeigt eine Schutzfolie mit einer Folie, die einseitig mit einer Klebeschicht beschichtet ist, die insbesondere zur Anwendung auf lackierten Fahrzeugen wie Automobilen erforderlichen Eigenschaften, wobei die Klebemasse mindestens ein Polymer aus mindestens zwei verschiedenen α-Olefin-Monomeren enthält, vorzugsweise Ethylen und Propylen, wobei kein Monomer im Polymer einen Anteil von 75 Mol-%, bevorzugt einen Anteil von 60 Mol-%, überschreitet sowie eine Mooney-Viskosität ML (1+4) 125 °C von 50 oder höher besitzt.

Das Polymer kann ebenfalls ein Dien wie zum Beispiel 1,4-Hexadien, Dicyclopentadien oder insbesondere 5-Ethyliden-2-norbornen (ENB) enthalten. Beispiele für diese Polymere sind EP(D)M-Kautschuke vom Typ Vistalon® (Exxon Chemical), Nordel® (DuPont Dow Elastomers), Buna® (Bayer), Keltan® (DSM Elastomers), Royalene® (Uniroyal Chemicals) und Duteral® (EniChem), um nur einige beispielhaft zu nennen, ohne daß diese Liste abschließend zu verstehen ist.

Norbornen ist der Trivialname für Bicyclo[2.2.1]hept-2-en, dessen räumliche Struktur wie folgt aussieht: 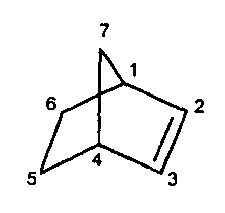 Die räumliche Struktur des vom Norbornen abgeleiteten Dien 5-Ethyliden-2-norbornen (ENB) sieht wie folgt aus: 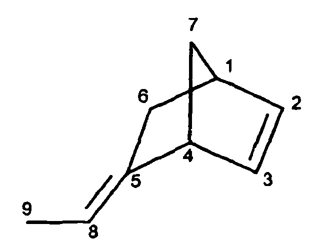 Die Mooney-Viskosität ML (1+4) 125 °C des Polymers weist mindestens einen Wert von 50 oder mehr auf, vorzugsweise 55 bis 85 (ASTM D 1646).
Dieser hohe Wert ist notwendig, um eine ausreichende Kohäsivität der Klebmasse sicherzustellen, so daß die Schutzfolie nach Wechselklimalagerung rückstandsfrei bei Abzugsgeschwindigkeiten von 20 m/min mit einer Klebkraft von 2,3 bis 3,6 N/cm von lackierten Oberflächen abziehbar ist sowie ein rückstandsfreies Ablösen der Schutzfolie nach Wechselklimalagerung bis zu einer Temperatur von mindestens 50 °C möglich ist.

Die Klebkraft auf Stahl beträgt 0,1 und 2 N/cm, sie liegt insbesondere zwischen 0,3 und 1 N/cm.

Vorzugsweise besteht mindestens ein Polymer der Klebmasse aus Ethylen, Propylen oder einem Dien, wobei weiter vorzugsweise der Anteil an Dien-Monomer des Polymers der Klebmasse unter 10 Gew.-% liegt.

Im Vergleich zu den EP(D)M-Materialien haben die für den Oberflächenschutz verwendeten Polyisobutylene (zum Beispiel Oppanol B 150® (BASF)) eine sehr viel höhere Lösungsviskosität, so daß ihre Verarbeitung mit einem sehr großen Aufwand verbunden ist.

Ein weiterer Vorteil der EPDM-Polymere ist durch die breite Variationsmöglichkeit des Verhältnisses der Comonomere Ethylen und Propylen gegeben. Kommerziell sind eine Vielzahl an EPDM-Polymeren zugänglich, so daß je nach Anforderung das passende Polymer eingesetzt werden kann. Für die erfindungsgemäße Selbstklebemasse werden EPDM-Typen mit einem Propylen-Gehalt größer 25%, bevorzugt aber zwischen 40 und 60%, verwendet. Ethylen/Propylen-Copolymere mit einem Propylengehalt zwischen 40 und 60% sind annährend amorph und eignen sich dadurch sehr gut als Basispolymer für eine Selbstklebemasse einer Oberflächenschutzfolie. Mit zunehmender Abweichung von diesem mittleren Propylengehalt werden, bedingt durch den höheren kristallinen Anteil im Polymer, erhebliche Lackdeformationen nach der Anwendung sowie ein Rückgang der Klebkraft beobachtet.

Zur Optimierung der Eigenschaften, insbesondere des Klebeverhaltens und der Deformation von speziellen Lacken, wird die zum Einsatz kommende Selbstklebemasse mit einem oder mehreren Additiven abgemischt. Additive können Klebrigmacher (Haftklebeeigenschaften optimierende Klebharze), Weichmacher, anorganische oder organische Füllstoffe, Pigmente, Lichtschutzmittel u. a. in Form von UV-absorbierenden sterisch gehinderten Aminen (HALS), Alterungsschutzmittel in Form von zum Beispiel Lactonen, primären und sekundären Antioxidantien oder weitere Elastomere sein. Optional können der Selbstklebemasse Vernetzungsmittel und Vernetzungspromotoren zugesetzt werden. Eine ausführliche Auswahl von Vernetzungsmittel und Vernetzungspromotoren sind in Ullmanns Enzyklopädie der technischen Chemie (4. Aufl.), Weinheim und "Manual for Rubber Industry", Bayer AG (1995) beschrieben.

Mögliche Elastomere zur Modifizierung der Selbstklebemasse sind zum Beispiel Polyisobutylen, Butylkautschuk, hydrierte Blockcopolymere aus Styrol und Dienen oder Acrylatcopolymere. Diese Elastomere werden im Bereich von 0 bis 20 Gew.-%, vorzugsweise 10 Gew.-% eines Polyisobutylens mit mittlerem Molekulargewicht, zum Beispiel Oppanol® B 10 (BASF), eingesetzt.

Die Klebemasse der anmeldungsgemäßen sellstklebendes Schutzfolie enthält als Klebrigmacher synthetische Kohlenwasserstoffharze (zum Beispiel aus C5 oder C9 Monomeren), Naturharze, Polyterpenharze auf Basis von α-, β-Pinen oder δ-Limonen, Kolophonium und Kolophoniumderivate. Vorrangig werden alterungsstabilere, hydrierte oder teilhydrierte Harze verwendet. In der Klebmasse des erfindungsgemäßen Abdeckklebebandes werden bevorzugte 20 bis 50 Gew.-%, insbesondere 30 bis 45 Gew.-% eines Kolophoniumharzes auf 100 Teile Basispolymer eingesetzt.

Geeignete Weichmacher für die Selbstklebemasse sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate (aus Isobuten oder Ethylen/Propylen), Acrylsäureester, Polyvinylether, Flüssig- und Weichharze auf Basis der Rohstoffe zu Klebharze, Wollwachs und andere Wachse oder flüssige Silikone. Besonders geeignet sind alterungsstabile Weichmacher ohne olefinische Doppelbindung. Bevorzugt werden 0 bis 40 Gew.-%, insbesondere 10 bis 30 Gew.-% flüssige Polymerisate auf Basis von Isobuten wie Hyvis® (BP Chemicals) oder Ethylen/Propylen wie Trilene® (Uniroyal) auf 100 Teile Basispolymer verwendet.

Als Trägermaterialien für die erfindungsgemäße Schutzfolie dienen thermoplastische Folien, bevorzugt Polyolefinfolien. Diese können zum Beispiel aus Polyethylen, Polypropylen sowie deren Mischungen oder Copolymeren (zum Beispiel Random-Copolymer) bestehen.
Für die Trägerfolien sind Dicken von 20 bis 80 µm (gegebenenfalls einschließlich der Haftvermittlerschicht) geeignet. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- wie auch in Querrichtung nicht überschreiten. Wegen der Beständigkeit gegen Schrumpf in der Wärme und guter Verformbarkeit sind Copolymere des Propylens besonders geeignet. Um die Trägerfolie witterungsstabil einzustellen, ist der Zusatz von Lichtschutzmitteln zwingend erforderlich. Geeignete Folien sind in DE 199 23 780 A1 und DE 196 35 704 A1 beschrieben.

Als Trägerfolie wird vorzugsweise eine thermoplastische Polyolefinfolie gewählt, welche unverstreckt ist und mindestens ein Polypropylenblockcopolymer enthält. Der Gehalt an Polypropylenblockcopolymer macht 10 bis 95 % (w/w) der Schutzfolie aus.

Derartige Folien können auf Blasanlagen oder vorzugsweise Cast-Anlagen (T-die technology) gefertigt werden, wobei die Folie nicht durch Recken (Verstrecken) mit Reckwalzen oder Reckrahmen mono- oder biaxial verstreckt wird. Beim Blasen einer solchen Folie ist die Orientierung über Abzugsgeschwindigkeit, Aufblasverhältnis und Temperaturprofil so gering wie möglich zu halten.

Die verwendeten Polypropylenblockcopolymere (auch Impact Resistant Polypropylen genannt) sind in der Literatur in Encycl. Polym. Sci. Technol. 13, 479ff (1988) und in Ullmann's Encyclopedia of Industrial Chemistry A21, 529ff (1992) beschrieben. Beispiele für Handelsnamen sind Propathene GSF 113 (ICI), 411 GA 05 (Amoco), PMA 6100 (Montell), Stamylan P (DSM), BD 801 F (Borealis), Daplen FFC1012 (PC), Novolen 2309 L.
Derartige Blockcopolymere unterscheiden sich untereinander im wesentlichen im Schmelzindex (= MFI = MFR) und im Gehalt an Comonomer. Der Schmelzindex beeinflußt die Festigkeit der Folie und die Fließfähigkeit der Schmelze in gegenläufiger Weise. Für die Herstellung der erfindungsgemäßen Schutzfolie ist ein Schmelzindex von 0,8 bis 15 g/10 min (ISO 1133 (A/4) bei 230 °C und 2,16 kg) günstig, um den Erfordernissen nach Zähigkeit und Reißfestigkeit einerseits und Verarbeitbarkeit (Produktionsgeschwindigkeit und Gleichmäßigkeit der Dicke bei coextrudierten Folien) andererseits zu erreichen. Der bevorzugte Bereich liegt zwischen 4 und 10 g/10 min. Die Coextrusion ist bei diesem Produkt ein geeignetes Mittel, um die Haftvermittlungsschicht bei der Herstellung der Folie einzubringen.
In dem Fall, daß Trägerfolie und Kleber durch Coextrusion miteinander verbunden werden, ist die Auswahl des Schmelzindex des Polypropylenblockcopolymers wie auch der weiteren thermoplastischen Bestandteile der Folienrezeptur wichtig. Der Gehalt an Comonomer in Polypropylenblockcopolymeren bestimmt die Weichheit, Schlagzugzähigkeit und die Wärmebeständigkeit der daraus hergestellten Schutzfolie. Vorzugsweise enthält die erfindungsgemäße Schutzfolie ein Polypropylenblockcopolymer mit 3 bis 15 % (w/w) Ethylen als Comonomer. Die Schlagzugzähigkeit nach DIN 53448 sollte längs und quer mindestens 1000 mJ/mm² betragen.

Als weitere Bestandteile können zum Beispiel Polyethylen (wie zum Beispiel HDPE, LDPE, MDPE, LLDPE, VLLDPE), Copolymere des Ethylens oder Propylens mit polaren Comonomeren, Polypropylen-Homopolymere oder Polypropylen-Random-Copolymere zur Feinabstimmung der Eigenschaften (mechanische, thermische oder andere Eigenschaften wie Glanz, Haftung des Klebers, Extrusionsverhalten usw.) mitverwendet werden. Besonders vorteilhaft ist die Kombination von mehreren Polypropylenen, insbesondere unterschiedlicher Weichheit und unterschiedlicher Schmelzindices, wie zum Beispiel weichem Blockcopolymer mit PP-Homopolymer oder einer harten Blockcopolymertype, da Zähigkeit, Wärmebeständigkeit und Fließverhalten besser an die Notwendigkeiten angepaßt werden können als bei alleiniger Verwendung eines Blockcopolymers. Für eine hinreichende Wärmebeständigkeit sollte der Anteil an Propylen in einer Folienschicht mindestens 65 % (w/w) betragen. Bei mehrlagigem Aufbau der Folienschicht ist dies diejenige Schicht, die für die Festigkeit verantwortlich ist und daher den höchsten Polypropylenanteil enthält (in der Regel auch die höchste Dicke aufweist) und nicht eine eventuelle Haftvermittlerschicht.

Weiter vorzugsweise kann die Folie bestehen aus einer Mischung aus
- 40 Gew.-Teilen bis 70 Gew.-Teilen Polyethylen,
- 20 Gew.-Teilen bis 40 Gew.-Teilen Polypropylen,
- 8 Gew.-Teilen bis 15 Gew.-Teilen Titandioxid,
- 0,3 Gew.-Teilen bis 0,7 Gew.-Teilen Lichtschutzstabilisatoren.

Von den 40 Gew.-Teilen bis 70 Gew.-Teilen Polyethylen in der Folie sind vorzugsweise 30 Gew.-Teile bis 50 Gew.-Teile schlagzähes Polyethylen.

Die Verwendung des Titandioxid-Batches bewirkt eine erhöhte UV-Reflexion sowie ein verringertes Aufwärmen der Schutzfolie bei starker Sonneneinstrahlung.
Als Lichtschutzstabilisatoren kommen insbesondere sterisch gehinderte Amine zum Einsatz.

Vorzugsweise liegt die UV-Durchlässigkeit der Schutzfolie im Bereich von 290 bis 360 nm unter 1 %, vorzugsweise unter 0,1 %.

Zur Verbesserung der Haftung zwischen Folie und Selbstklebemasse ist die Verwendung einer Haftvermittlerschicht vorteilhaft, aber nicht zwingend erforderlich, die Trägerfolie besteht in einem solchen Fall aus der Basisschicht und der Haftvermittlerschicht. Letztere besteht vorzugsweise aus einem Polyolefin, einem Blend aus mehreren Polyolefinen und/oder Komponenten der Basisschicht und/oder Komponenten der Klebmasse. Durch die Verwendung einer Haftvermittlerschicht kann sichergestellt werden, daß auch bei erhöhten Lacktemperaturen von 60 °C, wie sie unter Sonneneinstrahlung oft erreicht wird, ein rückstandsfreies Entfernen des Klebebandes von der zu schützenden Oberfläche möglich ist.

Zur Verbesserung der Abrollkraft von Rollenware ist die Verwendung einer Trennlackierung vorteilhaft. Vorzugsweise werden Silicone und Polyvinylcarbamate insbesondere Polyvinylstearylcarbamat (PVSC) mit einem Auftrag von 0,2 bis 0,5 g/m² verwendet.

Überraschenderweise zeigt eine Klebemasse, die im wesentlichen aus einem Co- oder Terpolymer mit einer Mooney-Viskosität ML (1+4) 125 °C von mindestens 50 besteht, die angestrebte Eigenschaftskombination:
- gute Initialhaftung
- geringes Aufziehen
- gute UV-Beständigkeit
- äußerst geringe beziehungsweise keine Lackdeformation
- hinreichende Verklebungsfestigkeit bei Applikation auf gewölbten Flächen
- hohe Kohäsion (keine Rückstände nach Lagerung auch nicht bei erhöhten Abzugstemperaturen von 50 °C)

Insbesondere die Kombinationen von guter Initialhaftung und geringem Aufziehen nach Lagerung sind völlig überraschende Eigenschaften.

Diese Selbstklebemassen weisen auf der einen Seite eine gute Haftfestigkeit auf den verschiedenen in der Automobilindustrie gebräuchlichen Lacken auf.
Auch unter Feuchte- oder Wechselklimaeinfluß (AFERA 4001), Windeinwirkung oder in komplizierten Verklebungsgeometrien an Kanten und gewölbten Flächen löst sich die Schutzfolie nicht vom Fahrzeug ab. Darüber hinaus zeigt die Selbstklebemasse eine hinreichende Verklebungsfestigkeit innerhalb der ersten Minuten nach Applikation auf, so daß die Schutzfolie bereits nach einer halben Stunde zum Beispiel einer starken Fahrtwindbelastung (bis zu 160 km/h) ausgesetzt werden kann, ohne andererseits nach längerem Gebrauch schwer entfernbar zu sein. Insbesondere zeigt die erfindungsgemäße Selbstklebemasse auf einer 65 um dicken Folie, die überwiegend aus einem Propylen-Copolymer besteht, auf Polyurethan lackierten und für 30 Minuten bei 130 °C wärmebehandelten Blechen nach einer Wechselklimalagerung keine Lackdeformation.

Die Abzugskraft der erfindungsgemäßen Schutzfolie von PU-Lacken beträgt sofort nach dem Applizieren mindestens 0,2 und nach Wechselklimalagerung höchstens 3,0 N/cm (analog Methode AFERA 4001).

Die Abzugskraft bei praxisrelevanter Abzugsgeschwindigkeit von 20 m/min beträgt 3,6 N/cm oder weniger. Auch die Bestrahlung der Schutzfolie mit UV-Licht, beispielsweise mit Xenotest 1200 bei 55 °C über 3000 Stunden (DIN 53387), führt zu keinen Mängeln in den Eigenschaften wie Versprödung der Folie. Die Schutzfolie verursacht weder Lackdeformationen oder Lackverfärbungen noch treten Masserückstände beim Abziehen auf.

Die erfindungsgemäße Schutzfolie ist somit besonders zum Montage- oder Transportschutz des frischen Abschlußlacks von Automobilen oder als Bearbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.

Darüber hinaus zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Feuchtigkeit, Hitze und Kälte, wobei die Witterungsstabilität von wenigstens einem halben Jahr gegeben ist. Auch höchste Sonneneinstrahlungsquoten, wie sie beispielsweise in Florida auftreten, führen nicht zu einem Versagen oder Ablösen der Schutzfolie, zumindest nicht in einem Zeitraum von sechs Monaten.

Nach Anwendung der Schutzfolie treten durch die Selbstklebemasse nach einer Lagerung für 14 Tage bei wechselnden Temperaturen sowie unter Witterungseinfluß keine Deformationen der darunter liegenden Lackschicht auf. Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen.

Nach Gebrauch ist die Schutzfolie trotz der geforderten guten Haftfestigkeit rückstandsfrei und ohne Reißen der Trägerfolie abziehbar. Hierbei kommt der Schutzfolie ihr geringes Aufziehen auf der Lackoberfläche zugute, so daß sie auch nach Verklebungen in großen Breiten mit einem geringen Kraftaufwand abgezogen werden kann.

Im folgenden werden die eingesetzten Testmethoden näher dargestellt.

Die Klebkräfte werden bei einem Abzugswinkel von 180° nach AFERA 4001 bestimmt. Hierbei werden Stahlplatten sowie Prüfbleche, die mit einem PU-Lack lackiert sind, als Prüfuntergrund verwendet. In einer abgewandelten Klebkraftprüfung werden die 15 mm breiten Teststreifen mit einer Geschwindigkeit von 20 m/min in einem 180° Winkel, bei einer Temperatur von 23 °C ± 1 °C und einer relativen Luftfeuchte von 50 % ± 5% von einem mit PU-Lack lackierten Blech abgezogen.

Die maximalen Abzugstemperaturen werden bei Abzugswinkeln von 90 sowie 180° bestimmt, wobei die Prüftemperaturen Schrittweise (5 °C) erhöht werden. Es wird die Temperatur bestimmt, bei der noch keine Massereste beziehungsweise Umspulung auf den Prüfuntergründen auftritt. Hierbei werden Prüfbleche, die mit einem PU-Lack lackiert sind, als Prüfuntergrund verwendet.

Die Klebkräfte, maximale Abzugstemperatur sowie Lackdeformationen wurden nach einer Wechselklimalagerung bestimmt. Als Prüfuntergrund dienten wieder mit PU-Lack lackierte Blech.

Die Wechselklimalagerung besteht aus folgenden Zyklen:

| Zyklus 1 | | Zyklus 2 | |
|---|---|---|---|
| Dauer [h] | Temperatur [°C] | Dauer [d] | Temperatur [°C] |
| 3 | 90 | 4 | 80 |
| | | 4 | -30 |
| | | 16 | 40 |
| | | | bei 98% rel. Feuchte |

Bei der Wechselklimalagerung wird der Zyklus 1 einmal und der Zyklus 2 viermal durchlaufen, sowie anschließend diese Prozedur ein weiteres mal wiederholt.

Nach Abziehen der Teststreifen erfolgt eine visuelle Beurteilung der Lackdeformationen.

Im folgenden soll die Erfindung anhand von Beispielen erläutert werden, ohne diese damit allerdings einschränken zu wollen.

### Beispiele

### Beispiel 1

Eine Folie wird durch Flachfolienextrusion in 1450 mm Breite gefertigt. Sie besteht aus einer 50 µm dicken Basisschicht und einer 15 µm dicken Haftvermittlerschicht. Die Basisschicht besteht aus 60 Gew.-Teilen eines PP-Copolymers, 25 Gew.-Teilen eines PP-Homopolymers, 6,3 Gew.-Teilen LLDPE, 8,4 Gew.-Teilen Titandioxid und 0,3 Gew.-Teilen eines HALS-Stabilisators (Tinuvin 770, Ciba) (analog Beispiel 3 DE 199 23 780 A1). Die Haftvermittlerschicht (10 µm) besteht aus einer Mischung aus 40 Gew.-Teilen des PP-Copolymers, 10 Gew.-Teilen LLDPE und 50 Gew.-% des als Klebmasse beschriebenen Basispolymers. Auf der Rückseite der Trägerfolie wird eine Trennlackierung, bestehend aus PVSC (Polyvinylstearylcarbamat), in einer Dicke von 0,3 g/m² aus einer toluolischen Lösung aufgetragen.
Als Klebmasse wird eine 10 %ige Lösung in Toluol aus 70 Gew.-% eines Terpolymeren, bestehend aus 52 Gew.-% Ethylen, 48 Gew.-% Propen und 4 Gew.-% 5-Ethyliden-2-norbornen, mit einer Mooney-Viskosität ML (1+4) 125 °C von 75 und 30 Gew.-% Foral® 105 E (Hercules) mit einem Streichbalken auf die Folie aufgetragen und bei 80 °C in einem Trockenkanal vier Minuten lang getrocknet. Die erhaltene Schutzfolie wird am Rand besäumt und zu 200 m langen und 1400 mm breiten Rollen gewickelt. Der Klebmasseauftrag beträgt 18 µm.
Die Selbstklebefolie läßt sich leicht und faltenfrei abwickeln und beim Gebrauch zum Schutz von Automobilen einwandfrei applizieren. Nach Gebrauch kann die Selbstklebefolie bis zu einem halben Jahr Verklebungsdauer unter Außenbewitterung ohne Rückstände auch mit höheren Geschwindigkeiten leicht wieder abgezogen werden. Deformationen der Lackoberfläche werden nicht beobachtet.

### Beispiel 2

Eine Folie wurde analog Beispiel 1 hergestellt und beschichtet, wobei als Klebmasse ein Terpolymer wie in Beispiel 1, jedoch mit einem Zusatz von 10 Gew.-% Hyvis® 200 (Weichmacher, BP Chemical) und 0,2 Gew.-% Irganox® 1010 (Ciba) diente. Der Klebmasseauftrag beträgt 16 µm.

Nach der Wechselklimalagerung auf einer 2K PU-Lackoberfläche kann diese Schutzfolie auch bei praxisrelevanten Abzugsgeschwindigkeiten leicht abgezogen werden. Es sind weder Rückstände noch Lackdeformationen in der Fläche und den Kantenbereichen erkennbar.

### Beispiel 3

Die Schutzfolie wurde durch Coextrusion von drei Schichten einschließlich Klebmasse hergestellt. Die Basisschicht besteht aus den Rohstoffen wie im Beispiel 1 beschrieben. Der Haftkleber besteht aus 60 Gew.-% eines Polymer aus 63 Gew.-% Ethylen, 35 Gew.% Propen und 2 Gew.-% 5-Ethyliden-2-norbornen (granuliert und mit amorpher Kieselsäure gepudert) mit einer Mooney-Viskosität ML (1+4) 125 °C von 59, 10 Gew.-% eines Polymer aus 51 Gew.-% Ethylen und 49 Gew.-% Propen (granuliert und mit amorpher Kieselsäure gepudert) mit einer Mooney-Viskosität ML (1+4) 125 °C von 50, 30 Gew.-% Regalite® R101 (Hercules) und 0,2 Gew.-% Irganox 1010 (Ciba).
Der Extruder für die Basisschicht wurde mit den in Beispiel 1 genannten Rohstoffen beschickt, der der Kleberschicht mit dem granulierten gepuderten Terpolymer und der Extruder für die dazwischenliegende Haftvermittlerschicht mit einer Mischung aus 50 Gew.-Teilen recycelter Schutzfolie aus Beispiel 1 und 50 Gew.-Teilen granulierten Basispolymer des Haftklebers aus diesem Beispiel.
Nach der Wechselklimalagerung auf einer PU-Lackoberfläche kann diese Schutzfolie auch bei praxisrelevanten Abzugsgeschwindigkeiten leicht abgezogen werden. Es sind weder Rückstände noch Lackdeformationen in der Fläche und den Kantenbereichen erkennbar.

### Beispiel 4

Die Herstellung der Schutzfolie erfolgte analog Beispiel 1 mit folgenden Änderungen: Die Klebemasse bestand aus 60 Gew.-% eines Terpolymers (52 Gew.-% Ethylen, 39 Gew.-% Propen und 9 Gew.-% 5-Ethyliden-2-norbornen mit einer Mooney-Viskosität ML (1+4) 125 °C von 60), 10 Gew.-% eines Terpolymers (69 Gew.-% Ethylen, 27 Gew.-% Propen und 4 Gew.-% 5-Ethyliden-2-norbornen mit einer Mooney-Viskosität ML (1+4) 125 °C von 23), 20 Gew.-% eines flüssigen Polybutens (Hyvis® 200, BP Chemicals) sowie einem Klebharz (Hercures® A 101, Hercules). Die Klebemasse wurde nach der Beschichtung auf die Trägerfolie im Wärmekanal bei 110 °C vernetzt.
Die Schutzfolie wurde auf frisch lackierten Blechen (PU-Lack) verklebt. Nach der Wechselklimalagerung kann diese Schutzfolie auch bei praxisrelevanten Abzugsgeschwindigkeiten leicht abgezogen werden. Es sind keine Rückstände in der Fläche und den Kantenbereichen allerdings leichte Lackdeformationen erkennbar.

| Beispiel Nr. | 1 | 2 | 3 | 4 |
|---|---|---|---|---|
| Klebkraft Stahl (AFERA 4001) [N/cm] | 0,5 | 1,0 | 0,5 | 0,3 |
| Klebkraft auf PU-Lack nach 0,5 h [N/cm] | 0,3 | 0,8 | 0,4 | 0,2 |
| Klebkraft auf PU-Lack nach Wechselklimalagerung; Abzugsgeschwindigkeit 0,3 m/min [N/cm] | 1,6 | 2,4 | 1,8 | 2,9 |
| Klebkraft auf PU-Lack nach Wechselklimalagerung; Abzugsgeschwindigkeit 20 m/min [N/cm] | 2,8 | 3,0 | 1,9 | 2,6 |
| Max. Abzugstemperatur von PU-Lack nach Wechselklimalagerung [°C] | 60 | 50 | 55 | 50 |
| Rückstände | - | - | - | - |
| Deformationen | - | - | - | + |

| | | | | |
|---|---|---|---|---|
| - keine; + wenig; ++ mittel; +++ stark | | | | |

### Vergleichsbeispiel 1

Die Herstellung erfolgt analog Beispiel 1. Als Haftkleber wird ein Copolymer, bestehend aus je 48 Gew.-% Propen und Ethylen und 4 Gew.-% 5-Ethyliden-2-norbornen mit einer Mooney-Viskosität ML (1+4) bei 125 °C von 28, eingesetzt. Als Lösemittel wurde Toluol verwendet. Nach einer Wechselklimalagerung verklebt auf PU-Lack und anschließendem Abziehen bei einer praxisnahen Geschwindigkeit werden Masserückstände beobachtet.

### Vergleichsbeispiel 2

Als Klebmasse dient ein Blend aus 30 Gew.-% eines Terpolymers (56 Gew.-% Ethylen, 38,8 Gew.-% Propen und 5,2 Gew.-% Dicyclopentadien; Mooney-Viskosität ML (1+4) 125 °C von 43), 55 Gew.-% eines Terpolymers (51 Gew.-% Ethylen, 44 Gew.-% Propen und 5 Gew.-% 5-Ethyliden-2-norbornen, Mooney-Viskosität ML (1+4) 125 °C von 20), 5 Gew.-% eines Terpenharzes (Resin PC 1150, Yasuhara Chemical), sowie 15 Gew.-% eines flüssigen Polybutens (Hyvis® 5, BP Chemicals) und 2,5 Gew.-% Triallylcyanurat. Die Klebemasse wurde analog Vergleichsbeispiel 1 hergestellt und nach dem Beschichten auf der Polyolefin-Folie (Beispiel 1) unter Stickstoff mit Elektronenstrahlen vernetzt (Dosis 10 kGy). Nach Wechselklimalagerung werden starke Deformationen der Lackoberfläche beobachtet.

### Vergleichsbeispiel 3

Als Klebmasse wird eine Copolymeren, bestehend aus je 30 Mol-% Propen und Buten(1) und 40 Mol-% 4-Methylpenten-(1) verwendet. Die Herstellung der Klebmasse erfolgt wie im Vergleichsbeispiel 1 beschrieben. Nach dem Demaskieren nach Wechselklimalagerung werden ein starker Anstieg der Klebkräfte sowie Rückstände auf der Lackoberfläche beobachtet.

### Vergleichsbeispiel 4

Wie Vergleichsbeispiel 1, jedoch mit einem Copolymer aus 70 Mol-% Vinylacetat und 30 Mol-% Ethylen (Levapren® 700, Bayer). Nach Verklebung auf frischem Lack sind starke Deformationen der Lackoberfläche erkennbar. Das Abziehen der Folie von PU-Lack nach Wechselklimalagerung bei einer Geschwindigkeit von 20 m/min ist nur mit einem großen Kraftaufwand möglich.

### Vergleichsbeispiel 5

Die Herstellung erfolgt analog Beispiel 1, als Klebmasse wird eine Mischung aus Polyisobutylenen eingesetzt, 25 Gew.-Teile Oppanol® 150 (BASF) und 75 Gew.-Teile Textrax® 4T (Nippon Petrochemicals). Auf PU-Lack verklebte Muster werden einer Wechselklimalagerung unterworfen. Die Abzugskräftekräfte sind sehr gering. Bei Verklebung auf frischem Lack sind im Kantenbereich geringfügige Deformationen des Lackes erkennbar.

| Vergleichsbeispiel Nr. | 1 | 2 | 3 | 4 | 5 |
|---|---|---|---|---|---|
| Klebkraft Stahl (AFERA 4001) [N/cm] | 0,6 | 0,3 | 0,3 | 0,9 | 0,2 |
| Klebkraft von PU-Lack nach 0,5 h [N/cm] | 0,4 | 0,2 | 0,3 | 0,7 | 0,1 |
| Klebkraft von PU-Lack nach Wechselklimalagerung; Abzugsgeschwindigkeit 0,3 m/min [N/cm] | 2,3 | 2,2 | 2,5 | 3,4 | 2,0 |
| Klebkraft von PU-Lack nach Wechselklimalagerung; Abzugsgeschwindigkeit 20 m/min [N/cm] | 4,3 | 3,4 | 3,2 | 5,1 | 0,7 |
| Max. Abzugstemperatur von PU-Lack nach Wechselklimalagerung [°C] | <25 | 60 | <25 | 50 | 70 |
| Rückstände | ++ | - | ++ | - | - |
| Deformationen | - | ++ | - | +++ | + |

| | | | | | |
|---|---|---|---|---|---|
| - keine; + wenig; ++ mittel; +++ stark | | | | | |

## Patentansprüche

1. Selbstklebende Schutzfolie für lackierte Oberflächen von Fahrzeugen, insbesondere Automobilen, **dadurch gekennzeichnet, dass**
der Träger der Schutzfolie eine Folie ist, die einseitig mit einer Klebmasse beschichtet ist,
deren Klebkraft auf Stahl zwischen 0,1 und 2,0 N/cm liegt, und
die Schutzfolie nach Wechselklimalagerung rückstandsfrei bei Abzugsgeschwindigkeiten von 20 m/min mit einer Klebkraft von 2,3 bis 3,6 N/cm von lackierten Oberflächen abziehbar ist sowie
ein rückstandsfreies Ablösen der Schutzfolie nach Wechselklimalagerung bis zu einer Temperatur von mindestens 50 °C möglich ist, wobei die Klebemasse
- mindestens ein Polymer aus mindestens zwei verschiedenen α-Olefinen, nämlich Ethylen und Propylen enthält,
- kein Monomer im Polymer einen Anteil von 75 Mol-% oder mehr hat,
- das Polymer eine Mooney-Viskosität ML (1+4) 125 °C mindestens von 50 aufweist und
- das Polymer ebenfalls ein Dien als weiteres Comonomer enthalten kann,
und wobei die Klebemasse Klebrigmacher enthält,
gewählt aus der Gruppe synthetische Kohlenwasserstoffharze, Naturharze, Polyterpenharze auf Basis von α-, β-Pinen oder δ-Limonen. Kolophonium oder Kolophoniumderivate.

2. Selbstklebende Schutzfolie gemäß Anspruch 1, **dadurch gekennzeichnet, dass** die UV-Durchlässigkeit im Bereich von 290 bis 360 nm unter 1 % liegt.

3. Selbstklebende Schutzfolie gemäß den Ansprüchen 1 und 2, **dadurch gekennzeichnet, dass** die Klebkraft auf Stahl zwischen 0,3 und 1,0 N/cm liegt.

4. Selbstklebende Schutzfolie nach mindestens einem der vorhergehenden Ansprüche, **dadurch gekennzeichnet, dass** in dem Basispolymer der Klebmasse der Anteil der olefinischen Monomere jeweils zwischen 40 und 60 Mol-% liegt.

5. Selbstklebende Schutzfolie nach mindestens einem der vorhergehenden Ansprüche, **dadurch gekennzeichnet, dass** das Basispolymer der Klebemasse eine Mooney-Viskosität ML (1+4) 125 °C zwischen 55 und 85 aufweist.

6. Selbstklebende Schutzfolie nach mindestens einem der vorhergehenden Ansprüche, **dadurch gekennzeichnet, dass** mindestens ein Polymer der Klebmasse aus Ethylen, Propylen sowie einem Dien besteht.

7. Selbstklebende Schutzfolie nach mindestens einem der vorhergehenden Ansprüche, **dadurch gekennzeichnet, dass** der Anteil an Dien-Monomer des Polymers der Klebmasse unter 10 Gew.-% liegt.

8. Selbstklebende Schutzfolie nach mindestens einem der vorhergehenden Ansprüche, **dadurch gekennzeichnet, dass** sich zwischen der Trägerfolie und der Klebemasse ein Haftvermittler befindet.

9. Selbstklebende Schutzfolie nach mindestens einem der vorhergehenden Ansprüche, **dadurch gekennzeichnet, dass** die Klebemasse vernetzt ist.

10. Selbstklebende Schutzfolie nach mindestens einem der vorhergehenden Ansprüche, **dadurch gekennzeichnet, dass** sich auf der Rückseite der Trägerfolie eine Trennlackierung befindet.

11. Selbstklebende Schutzfolie nach mindestens einem der vorhergehenden Ansprüche, **dadurch gekennzeichnet, dass** die Klebmasse und die Trägerfolie durch simultane Coextrusion zu der Schutzfolie verbunden ist.

12. Selbstklebende Schutzfolie nach mindestens einem der vorhergehenden Ansprüche, **dadurch gekennzeichnet, dass** die Klebemasse bis zu 50 Gew.-% eines oder mehrerer Klebharze und/oder bis zu 40 Gew.-% eines oder mehrerer Weichmacher enthält.

13. Verwendung der Schutzfolie nach mindestens einem der vorhergehenden Ansprüche auf gewölbten Flächen auf der Außenseite von Automobilen.

14. Verwendung einer Schutzfolie nach mindestens einem der vorhergehenden Ansprüche, **dadurch gekennzeichnet, dass** die Schutzfolie auf lackierten Flächen vor der Fahrzeugmontage appliziert wird.

## Claims

1. Self-adhesive protective sheet for painted surfaces of vehicles, especially automobiles, **characterized in that**
the backing of the protective sheet is a film coated on one side with an adhesive and whose adhesion to steel is between 0.1 and 2.0 N/cm, and
following storage under alternating climatic conditions, the protective sheet can be removed without residue from painted surfaces at speeds of 20 m/min with a bond strength of from 2.3 to 3.6 N/cm, and
the protective sheet can be detached without residue following storage under alternating climatic conditions at a temperature of up to at least 50°C,
- the adhesive comprising at least one polymer of at least two different α-olefins, namely ethylene and propylene,
- no monomer having a fraction of 75 mol% or more in the polymer,
- the polymer having a Mooney viscosity ML (1+4) 125°C of at least 50, and
- the polymer likewise possibly including a diene as further comonomer,
and the adhesive containing tackifiers selected from the group consisting of synthetic hydrocarbon resins, natural resins, polyterpene resins based on α-pinene, β-pinene or δ-limonene, rosin and rosin derivatives.

2. Self-adhesive protective sheet according to Claim 1, **characterized in that** the UV transmittance in the region from 290 to 360 nm is below 1%.

3. Self-adhesive protective sheet according to either of Claims 1 and 2, **characterized in that** the bond strength on steel is between 0.3 and 1.0 N/cm.

4. Self-adhesive protective sheet according to at least one of the preceding claims, **characterized in that** the fraction of the olefinic monomers in the base polymer of the adhesive is in each case between 40 and 60 mol%.

5. Self-adhesive protective sheet according to at least one of the preceding claims, **characterized in that** the base polymer of the adhesive has a Mooney viscosity ML (1+4) 125°C of between 55 and 85.

6. Self-adhesive protective sheet according to at least one of the preceding claims, **characterized in that** at least one polymer of the adhesive is composed of ethylene, propylene and a diene.

7. Self-adhesive protective sheet according to at least one of the preceding claims, **characterized in that** the diene monomer fraction of the polymer of the adhesive is less than 10% by weight.

8. Self-adhesive protective sheet according to at least one of the preceding claims, **characterized in that** an adhesion promoter is located between the backing film and the adhesive.

9. Self-adhesive protective sheet according to at least one of the preceding claims, **characterized in that** the adhesive has been crosslinked.

10. Self-adhesive protective sheet according to at least one of the preceding claims, **characterized in that** there is a release coating on the back of the backing film.

11. Self-adhesive protective sheet according to at least one of the preceding claims, **characterized in that** the adhesive and the backing film are joined by simultaneous coextrusion to form the protective sheet.

12. Self-adhesive protective sheet according to at least one of the preceding claims, **characterized in that** the adhesive contains up to 50% by weight of one or more tackifier resins and/or up to 40% by weight of one or more plasticizers.

13. Use of the protective sheet according to at least one of the preceding claims on curved surfaces on the outside of automobiles.

14. Use of a protective sheet according to at least one of the preceding claims, **characterized in that** the protective sheet is applied to painted areas prior to assembly of the vehicle.

## Revendications

1. Film protecteur auto-adhésif pour surfaces laquées de véhicules, notamment d'automobiles, **caractérisé en ce que**
le support du film protecteur est un film qui est revêtu d'un côté avec un matériau adhésif,
dont la force adhésive sur l'acier est comprise entre 0,1 et 2,0 N/cm, et
le film protecteur peut être retiré des surfaces laquées sans résidu après un stockage avec variations du climat à des vitesses de retrait de 20 m/min avec une force d'adhésion de 2,3 à 3,6 N/cm, et
un décollement sans résidu du film protecteur est possible après un stockage avec variations du climat jusqu'à une température d'au moins 50 °C, le matériau adhésif
- contenant au moins un polymère d'au moins deux α-oléfines différentes, à savoir l'éthylène et le propylène,
- aucun monomère ne présentant une proportion de 75% en moles ou plus dans le polymère,
- le polymère présentant une viscosité de Mooney ML (1+4) 125 °C d'au moins 50, et
- le polymère pouvant également contenir un diène en tant que comonomère supplémentaire,
et le matériau adhésif contenant un agent collant choisi dans le groupe constitué par les résines hydrocarbonées synthétiques, les résines naturelles, les résines de polyterpène à base d'α-, β-pinène ou de δ-limonène, la colophane ou les dérivés de colophane.

2. Film protecteur auto-adhésif selon la revendication 1, **caractérisé en ce que** la perméabilité aux UV dans la plage allant de 290 à 360 nm est inférieure à 1 %.

3. Film protecteur auto-adhésif selon les revendications 1 et 2, **caractérisé en ce que** la force adhésive sur l'acier est comprise entre 0,3 et 1,0 N/cm.

4. Film protecteur auto-adhésif selon au moins l'une quelconque des revendications précédentes, **caractérisé en ce que** la proportion des monomères oléfiniques dans le polymère de base du matériau adhésif est à chaque fois comprise entre 40 et 60 % en moles.

5. Film protecteur auto-adhésif selon au moins l'une quelconque des revendications précédentes, **caractérisé en ce que** le polymère de base du matériau adhésif présente une viscosité de Mooney ML (1+4) 125 °C comprise entre 55 et 85.

6. Film protecteur auto-adhésif selon au moins l'une quelconque des revendications précédentes, **caractérisé en ce qu'**au moins un polymère du matériau adhésif est constitué par de l'éthylène, du propylène et un diène.

7. Film protecteur auto-adhésif selon au moins l'une quelconque des revendications précédentes, **caractérisé en ce que** la proportion de monomère diène du polymère du matériau adhésif est inférieure à 10 % en poids.

8. Film protecteur auto-adhésif selon au moins l'une quelconque des revendications précédentes, **caractérisé en ce qu'**un promoteur d'adhésion se trouve entre le film support et le matériau adhésif.

9. Film protecteur auto-adhésif selon au moins l'une quelconque des revendications précédentes, **caractérisé en ce que** le matériau adhésif est réticulé.

10. Film protecteur auto-adhésif selon au moins l'une quelconque des revendications précédentes, **caractérisé en ce qu'**un laquage de séparation se trouve sur le côté arrière du film support.

11. Film protecteur auto-adhésif selon au moins l'une quelconque des revendications précédentes, **caractérisé en ce que** le matériau adhésif et le film support sont reliés par coextrusion simultanée pour former le film protecteur.

12. Film protecteur auto-adhésif selon au moins l'une quelconque des revendications précédentes, **caractérisé en ce que** le matériau adhésif contient jusqu'à 50 % en poids d'une ou de plusieurs résines adhésives et/ou jusqu'à 40 % en poids d'un ou de plusieurs plastifiants.

13. Utilisation du film protecteur selon au moins l'une quelconque des revendications précédentes sur des surfaces bombées sur le côté extérieur d'automobiles.

14. Utilisation d'un film protecteur selon au moins l'une quelconque des revendications précédentes, **caractérisée en ce que** le film protecteur est appliqué sur des surfaces laquées avant le montage du véhicule.
